# EUROPEAN PATENT APPLICATION

(11) **EP 3 290 317 A1**
(43) Date of publication of application: **07.03.2018**
(21) Application number: 17185668.5
(22) Date of filing: 10.08.2017
(51) Int. Cl.: B62K 19/40, B62M 6/40, B62J 11/00, H02J 7/02, H02J 50/10

(54) **WIRELESS CONNECTION SYSTEM BETWEEN A SMARTPHONE AND AN E-BIKE**

(30) Priority: 30.08.2016 IT 202016184530 U
(71) Applicant: Sitael S.p.A., 70042 Mola di Bari (BA) (IT)
(72) Inventor: PERTOSA, Angelo Matteo, 70043 MONOPOLI (BA) (IT)
(74) Representative: Scorza, Federica

(57) **Abstract**

A wireless connection system (100) between a smartphone and an e-bike, comprising a smartphone (101), an e-bike (102), and a support (103) configured to house the smartphone (101) on the e-bike (102) and at least one first magnetic element (110). The support (103) comprises at least one second magnetic element (104), a NFC tag (105) configured to start an associated Application for sending a message to the smartphone (101) when it is housed on the support (103) and a wireless charging module (106).

## Description

The present invention relates to a wireless connection system between a smartphone and an e-bike.

In particular, the present invention is related to a wireless connection system between a smartphone and an e-bike, that is a bicycle designed to connect to a mobile device.

As it is known, e-bicycles, or bicycles equipped with Bluetooth or cable connection systems to a mobile device, such as a smartphone, already exist.

However, the known connection systems between a smartphone and an e-bike requires manual startup of a specific mobile application by a user. In particular, the connection between the two devices is done by manually enabling a smartphone Bluetooth communication, by scanning and selecting again, manually, the device corresponding to the e-bike by means of which the user wants to enable a connection. Systems currently known, provides that upon connection, the user has the smartphone on a dedicated e-bike support and the app, installed on the smartphone, sends the user's identification data to the e-bike via Bluetooth connection, in order to activate certain pre-set features such as unlocking the burglar alarm, battery, or motor.

Also, known wireless connection systems between smartphone and e-bike cannot automatically switch between e-bikes and smartphones, resulting in numerous and complex actions that are required to the user.

Furthermore, known wireless connection systems between smartphone and e-bike do not allow a stable, simple and versatile positioning of the smartphone on the e-bike.

Scope of the present invention is to provide a wireless connection system between a smartphone and an e-bike, of the type suitable for connecting a mobile device to a bicycle enabling user recognition and activation of pre-set functions, having characteristics such as to overcome the limits that still affect the systems previously described with reference to the prior art.

According to the present invention, a wireless connection system between a smartphone and an e-bike is provided, as defined in claim 1.

For a better understanding of the present invention a preferred embodiment is now described, purely by way of non-limiting example, with reference to the accompanying drawings, in which:
- Figure 1 shows a schematic view of a wireless connection system between a smartphone and an e-bike according to the invention;
- Figure 2 shows a schematic view of a smartphone support for e-bike for a wireless connection system between a smartphone and an e-bike according to the invention;

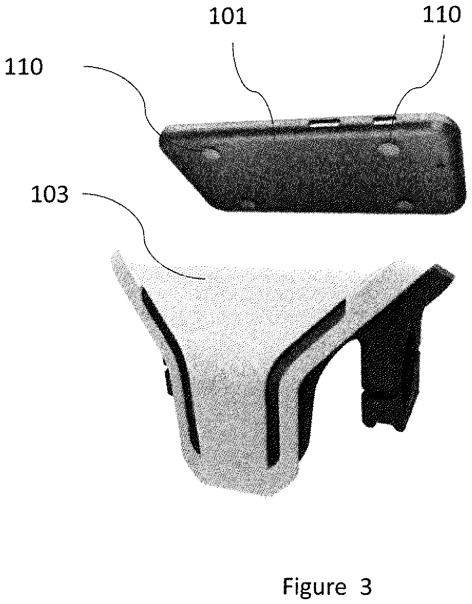

- Figure 3 shows a schematic view of a smartphone and a smartphone support for e-bike for a wireless connection system between a smartphone and an e-bike according to the invention.

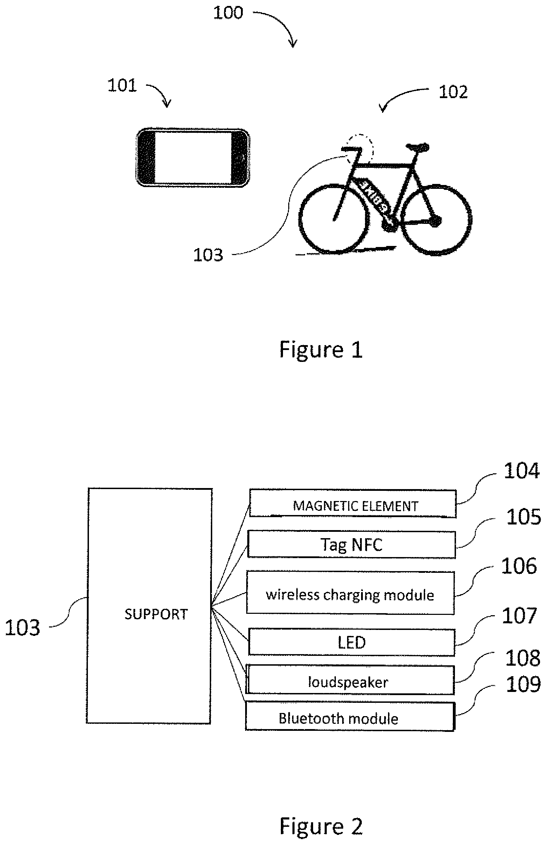

With reference to these figures and, in particular, to Figure 1, a wireless connection system between a smartphone and an e-bike is shown, according to the invention.

More in details, a wireless connection system 100 between a smartphone and an e-bike comprises a smartphone 101, or similar device, a bicycle suitable for wireless connection, i.e. an e-bike 102, at least a first magnetic element 110, a support 103 for housing the smartphone 101 on the e-bike 102 when in use, wherein the support 103 comprises at least one second magnetic element 104, a NFC tag 105, a wireless charging module 106 for the smartphone 101.

In particular, the least one first magnetic element 110 is connected or applied to the smartphone 101 being able to be magnetically coupled to at least a second magnetic element 104.

The wireless connection system 100 between a smartphone and an e-bike further comprises at least one bright LED 107 and a buzzer type loudspeaker 108.

The wireless connection system 100, according to the invention, allows automatic connection between the smartphones and the e-bikes by approaching smartphone 101 to support 103, preferably positioned on a front of the e-bike 102 corresponding to the handlebars.

Advantageously according to the invention, the second magnetic element 104 allows to guide and facilitate the placement of the smartphone 101 in the support 103.

Advantageously, according to the invention, the smartphone 101 when positioned in the support 103 reads a message from the NFC tag 105 and automatically starts an application (or App) associated with the type of read message. This application is configured to verify and possibly enable the Bluetooth connection of the smartphone 101 and make the Bluetooth connection with the e-bike 102 using the parameters contained in the message read by the NFC tag 105. Such parameters are encrypted, according to the invention.

According to an aspect of the invention, the support 103 notifies the connection through the bright LED 107 and a sound emitted by the loudspeaker 108.

When connected, the wireless connection system 100, according to the invention, allows the smartphone 101, using a special App, to notify information identifying the user using the Bluetooth communication channel to the e-bike 102. The e-bike 102 by acquiring user data and comparing with a database authorizes or denies the activation of functions such as unlocking the battery, or the motor.

According to an aspect of the invention, if the smartphone 101 does not have NFC, the smartphone 101, when placed at the support 103, measures the signal intensity emitted by the Bluetooth module 109 on the support 103, and when placed in contact with the support itself, communicates by means of a displayed notification, the possibility of connection with the e-bike 102. The App starts with confirmation by the user.

Advantageously, according to the invention, the wireless connection system 100 is versatile as it can also be used by NFC-free smartphones.

According to an aspect of the invention, the wireless connection system 100 comprises a smartphone 101 case suitable for wireless charging.

Advantageously, according to the invention, the wireless connection system 100 between a smartphone and an e-bike is simple and automatic, since App is automatically started, there is no need for scanning nearby Bluetooth devices nor user's selection of the device to connect to.

Advantageously according to the invention, the wireless connection system 100 between a smartphone and an e-bike is versatile since the second magnetic element 104 allows to guide and facilitate the positioning of smartphones 101 of various shapes or patterns on the support 103.

Finally, it is clear that the wireless connection system between a smartphone and an e-bike here described and illustrated may be subject to modifications and variations without thereby departing from the scope of the present invention, as defined in the appended claims.

## Claims

1. A wireless connection system (100) between a smartphone and an e-bike, comprising a smartphone (101), an e-bike (102), at least one first magnetic element (110) and a support (103) configured to house the smartphone (101) on the e-bike (102), **characterized in that** the support (103) comprises at least one second magnetic element (104), a NFC tag (105) configured to start an associated Application for sending a message to the smartphone (101) when it is housed on the support (103) and a wireless charging module (106).

2. A system (100) according to claim 1, comprising at least one bright LED (107) and a loudspeaker (108) configured for advising that the connection between the smartphone (101) and the e-bike (102) has occurred.

3. A system (100) according to claim 1, **characterized in that** the smartphone (101) is configured to communicate to the e-bike (102) user identification information associated with the application using Bluetooth communication.

4. System (100) according to claim 1, **characterized in** comprising a Bluetooth module (109) positioned on the support (103) emitting a signal that can be detected by the smartphone (101) when it is housed in the support (103) to communicate via a notification the possible connection between the smartphone (101) and the e-bike (102).
